# EUROPÄISCHE PATENTSCHRIFT

(11) **EP 2 831 394 B1**
(45) Veröffentlichungstag und Bekanntmachung des Hinweises auf die Patenterteilung: **03.05.2017**
(21) Anmeldenummer: 13711911.1
(22) Anmeldetag: 26.03.2013
(51) Int. Cl.: F02C 7/18

(54) **GASTURBINE MIT REGELBAREM KÜHLLUFTSYSTEM**
GAS TURBINE WITH ADJUSTABLE COOLING AIR SYSTEM
TURBINE À GAZ AVEC SYSTÈME D'AIR DE REFROIDISSEMENT RÉGLABLE

(30) Priorität: 30.03.2012 EP 12162525
(43) Veröffentlichungstag der Anmeldung: 04.02.2015
(73) Patentinhaber: General Electric Technology GmbH, 5400 Baden (CH)
(72) Erfinder: FRANITZA, Karsten, CH-5200 Brugg (CH); MARX, Peter, CH-5413 Birmenstorf (CH); STEIGER, Ulrich Robert, CH-5405 Baden-Dättwil (CH); BRIGHENTI, Andrea, CH-5400 Baden (CH)
(74) Vertreter: Bernotti, Andrea
(86) Internationale Anmeldenummer: PCT/EP2013/056344
(87) Internationale Veröffentlichungsnummer: WO 2013/144111

(56) Entgegenhaltungen:
- EP-A1- 2 305 982
- EP-A2- 1 965 052
- US-A1- 2010 154 434
- US-B1- 6 523 346

## Beschreibung

### TECHNISCHES GEBIET

Die vorliegende Offenbarung betrifft ein Verfahren zum Betrieb einer Gasturbine mit Kühlluftleitungen die auf unterschiedlichen Druckniveaus vom Verdichter gespiesen werden sowie eine Gasturbine mit mindestens zwei Kühlluftleitungen.

### STAND DER TECHNIK

Parallel mit den Anforderungen an die Leistung und den Wirkungsgrad von Gasturbine steigen die Anforderungen an die Kühlung der thermisch hochbelasteten Maschinenkomponenten einerseits und an die Auslegung des Kühlsystems andererseits. So muss eine ausreichende Kühlung im Interesse der Betriebssicherheit für alle möglichen Betriebsbedingungen der Gasturbine gewährleistet werden. Gleichzeitig ist der Kühlluftverbrauch typischerweise soweit wie möglich einzuschränken. In der EP 62932 wurde vorgeschlagen, die Komponenten einer Gasturbine mit Dampf im geschlossenen Kreislauf zu kühlen. Dies erfordert eine vergleichsweise aufwändige Abdichtung der kühldampfführenden Komponenten. Gleichzeitig erfolgt eine rein konvektive Kühlung der Komponenten; auf die Wirkung eines Kühlfilms zur Verminderung des Wärmeeintrags wird hierbei verzichtet.

Die Kühlung mit Verdichter-Anzapfluft weisst nach wie vor eine Reihe Vorteile auf, wobei die entnommene Kühlluftmenge im Interesse des Arbeitsprozesses typischerweise minimiert werden soll. In der Folge werden Kühlluftsysteme immer mehr an der Grenze ausgelegt, um im - aus kühltechnischer Sicht - ungünstigsten Betriebspunkt eine ausreichende Kühlung sicherzustellen, dabei aber nicht mehr Kühlluft zu verbrauchen als unbedingt notwendig. Das bedeutet einerseits eine hohe Empfindlichkeit auf Abweichungen des Arbeitsprozesses vom Auslegungspunkt der Kühlung, wenn beispielsweise aufgrund von Verschiebungen der Druckverhältnisse in einer Maschine die Kühlluftmengen variieren. Andererseits resultiert in einer Reihe anderer Betriebspunkte eine Überkühlung der thermisch belasteten Komponenten, wodurch die Leistungs- und Wirkungsgradpotentiale unerschlossen bleiben. Der zulässige Betriebsbereich, in dem ein sicherer Betrieb möglich ist, wobei alle kritischen Bauteile ausreichend mit Kühlluft eines geeigneten Temperaturniveaus versorgt werden, insbesondere der tiefe Teillastbereich und der Leerlaufbetrieb bzw. das Fahrkonzept mit dem Teillastbetrieb oder Leerlaufbetrieb möglich ist, sind jedoch typischerweise durch Kühlung mit Verdichteranzapfluft beschränkt.

Es wurde daher verschiedentlich, beispielsweise in der EP 1 028 230, vorgeschlagen, im Kühlluftpfad variable Drosselstellen anzuordnen. DE 199 07 907 schlägt vor, durch verstellbare Verdichterlaufreihen, welche unmittelbar benachbart zu einer Anzapfstelle für Kühlluft angeordnet sind, unmittelbar den Vordruck der Kühlluft zu justieren.

JP 11 182263 und EP 1 128 039 schlagen vor, Zusatzverdichter im Kühlluftpfad einer Gasturbine anzuordnen. Dergestalt wird der Totaldruck der Kühlluft über den vom Verdichter bereitgestellten Druck angehoben.

Daneben ist aus der DE 10 2008 044 436 A1 ein weiteres Sekundärluftsystem einer Gasturbine bekannt, bei dem mit Hilfe eines externen Verdichters den einzelnen Kühlluftsträngen zusätzlich einen Teil der benötigten Kühlluft zugeführt werden kann. Der Einsatz eines externen Verdichters ist jedoch aufgrund des erhöhten Ausfallrisikos nachteilig.

Weiter ist bekannt, dass beim Betrieb der Gasturbine unterhalb ihres Auslegungspunkts, d. h. unterhalb der Nennlast, ein Luftüberschuss bei der Verbrennung des Brennstoffs auftreten kann. Je niedriger die von der Gasturbine zu erbringende Last ist, umso grösser kann der Überschuss an vom angeschlossenen Verdichter zur Verbrennung bereitgestellter Luft sein. Dies führt dazu, dass in der Brennkammer die für die CO-Emissionen relevante Primärzonentemperatur der Flamme unter einen Minimalwert fallen kann. Dadurch werden verstärkt CO-Emissionen freigesetzt, was bei Vorhandensein von vorgegebenen Emissions-Grenzwerten den nutzbaren Betriebsbereich der Gasturbine bei Teillast begrenzen kann. Um diesem Problem zu begegnen, ist aus der DE 10 2008 044 442 A1 ein Gasturbinensystem und eine darin beschriebene Betriebsweise bekannt. Um die Emission aus dem Gasturbinensystem unter einem vorbestimmten Pegel zu halten, wird die von dem Verdichter zur Verbrennung üblicherweise bereitgestellte verdichtete Luft mit Hilfe eines Bypass umgeleitet. Der Bypass mündet dabei entweder stromauf der Entnahmestelle, d. h. in oder vor dem Verdichter oder auch stromab, d. h. in der Turbine. Dies Gasturbinensystem und das beschriebene Betriebsverfahren verringert jedoch den Wirkungsgrad der Gasturbine unnötig weit.

Weiter ist aus der US 2010/0154434 Al bekannt, bei Niedriglastbetrieb eine Umschaltung im Kühlluftversorgungssystem vorzunehmen, derart, dass Kühlluftentnahmen höheren Drucks auf Kühlluftversorgungsstränge geschaltet werden, die im Volllastbetrieb mit geringen Kühlluftdrücken versorgt werden. Es hat sich jedoch herausgestellt, dass insbesondere die Umschaltvorgänge Verbrennungsinstabilitäten und unnormales Maschinenverhalten hervorrufen können.

### DARSTELLUNG DER OFFENBARUNG

Der vorliegenden Erfindung liegt die Aufgabe zugrunde, einen zuverlässigen Betrieb des Kühlluftsystems einer Gasturbine über einen weiten Betriebsbereich der Gasturbine zu gewährleisten ohne dafür für den Betrieb unter Auslegungsbedingungen nennenswerte Leistungs- oder Wirkungsgradeinbussen in Kauf nehmen zu müssen. Insbesondere ist ein tiefer Teillastbetrieb bis zu Leerlaufbetrieb ohne Lebensdauereinbussen mit niedrigen Abgasemissionen zu gewährleisten.

Ein Aspekt der Offenbarung ist es, Kühlluft aus einem zweiten Teil des Kühlsystems, dass mit hohem Druck betrieben wird, in einen ersten Teil des Kühlsystems zu leiten, dass mit tieferem Druck betrieben wird, sobald die Druckverhältnisse in dem ersten Teil des Kühlsystems keine ausreichende Kühlung mehr gewährleisten. Dies ist beispielsweise der Fall, wenn für tiefe Teillast die verstellbaren Verdichterleitschaufeln geschlossen werden und damit der Druckaufbau in dem Verdichter nach hinten verschoben wird. Ein starkes Schliessen der verstellbaren Verdichtervorleitschaufeln ist vorteilhaft, um den Luftüberschuss bei tiefer Teillast oder Leerlauf zu reduzieren und so eine stabile saubere Verbrennung zu ermöglichen. Um eine Verwendung der Kühlluft des zweiten Teils des Kühlsystems in dem ersten Teil zu erlauben, wird eine Kühlung der von dem zweiten Teil abgeleiteten Kühlluft durchgeführt. Die ausreichend tiefe Kühllufttemperatur ist insbesondere daher nötig, da die Heissgassetemperatur bei Teillast aufgrund der stark geschlossen verstellbaren Verdichterleitschaufelreihen genügend hoch bleiben kann, was zur Realisierung einer CO-emissionsarmen Verbrennung notwendig ist. Weiter bleiben die Verdichterendtemperatur und die Verdichterentnahmetemperaturen trotz des tiefen Verdichterdruckverhältnisses relativ hoch, da mit dem Schliessen der verstellbaren Verdichterleitschaufeln der Verdichterwirkungsgrad sinkt. Dieser sinkt insbesondere bei einem vorgeschlagenen starken Schliessen der verstellbaren Verdichterleitschaufeln in Teilen des Verdichters um mehr als 40° und bis zu über 60° gegenüber der Vollaststellung signifikant. Im Extrem fällt der Verdichterwirkungsgrad auf unter ein Drittel des Volllastwirkungsgrades, so dass die Verdichterentnahmetemperaturen auch bei tiefem Druckverhältnis hoch bleiben. Neben den Heissgasteilen der Turbine wird auch der Rotor der Gasturbine mit Kühlluft gekühlt. Auch wenn die thermische Belastung der Turbine bei Teillast kleiner wird und daher eventuell mit wärmerer Kühlluft gekühlt werden kann, ist sicher zu stellen, dass die Rotorkühlluft kühl genug bleibt.

Die offenbarte Gasturbine umfasst einen Verdichter, eine Brennkammer und eine Turbine, einen Rotor, sowie einem Kühlluftsystem, mit mindestens einer ersten Kühlluftleitung, die von einer niedrigen ersten Druckstufe des Verdichters zur Turbine führt und mindestens einer zweiten Kühlluftleitung, die von einer höheren zweiten Druckstufe des Verdichters zur Turbine.

Die offenbarte Gasturbine zeichnet sich dadurch aus, dass das Kühlluftsystem der Gasturbine eine Verbindungsleitung, die von der zweiten Kühlluftleitung zu der ersten Kühlluftleitung führt, umfasst, wobei in der Verbindungsleitung eine Kühlvorrichtung, zur Kühlung eines von der zweiten Kühlluftleitung in die erste Kühlluftleitung strömenden Hilfskühlluftstroms, und ein Regelelement, zur Regelung des Hilfskühlluftstroms angeordnet, sind.

Nach einer Ausführungsform der Gasturbine ist in der Verbindungsleitung ein Quenschkühler zur Kühlung des Hilfskühlluftstroms angeordnet. Zur Kühlung des Hilfskühlluftstroms kann Wasser in den Quenschkühler eingespritzt werden, dass verdunstet und durch die Verdunstungswärme zu einer Kühlung des Hilfskühlluftstroms führt. Weiter wird durch den entstehenden Dampf der Kühlluftmassenstrom erhöht und die abgeführte Wärme nutzbringend der Turbine zugeführt.

Nach einer weiteren Ausführungsform der Gasturbine ist in der Verbindungsleitung ein Wärmetauscher zur Kühlung des Hilfskühlluftstroms angeordnet. In diesem wird der Hilfskühlluftstrom durch Wärmetausch gekühlt. Die abgeführte Wärme kann beispielsweise zur Brennstoffvorwärmung oder in einem Wasserdampfkreislauf genutzt werden.

Nach noch einer weiteren Ausführungsform der Gasturbine ist in der Verbindungsleitung eine Injektorpumpe (auch als Strahlpumpe bezeichnet) angeordnet. Der saugseitige Einlass der Injektorpumpe ist mit der Umgebung verbunden und der Treibmitteleinlass mit der zweiten Kühlluftleitung. Durch die Injektorpumpe kann Umgebungsluft angesaugt werden, die in der Injektorpumpe mit der Hilfskühlluft aus der zweiten Kühlluftleitung vermischt wird und diese dadurch kühlt. Durch den Druckaufbau in der Injektorpumpe kann die Mischung in die erste Kühlluftleitung eingeleitet werden und der Turbine zur Kühlung zugeführt werden.

Um sicher zu stellen, dass dem Kühlsystem durch die Injektorpumpe saubere Luft zugeführt wird, wird der Injektorpumpe gefilterte Luft zugeführt. Nach einer Ausführung ist der saugseitige Einlass in die Injektorpumpe über ein Filterhaus der Gasturbine mit der Umgebung verbunden. Ein Filterhaus ist typischerweise ein Bestandteil einer Gasturbinenanlage, um saubere Ansaugluft für den Verdichter bereit zu stellen. Alternativ kann saubere Luft beispielsweise auch an geeigneter Stelle einer Kraftwerkshalle oder einer Lärmschutzhaube entnommen werden, wobei dann entsprechende Sicherheitsvorschriften zu beachten sind.

Je nach Ausführung sind ein Quenschkühler, ein Wärmetauscher und eine Injektorpumpe allein oder in Kombination vorgesehen. Beispielsweise kann es vorteilhaft sein, zunächst den Hilfsmassenstrom durch Quenschkühlung zu kühlen und damit den Massenstrom zu erhöhen, bevor dieser in eine Injektorpumpe als Treibmittel geleitet wird. Weiter ist eine Kombination mit einem Wärmetauscher beispielsweise vorteilhaft, um je nach Verfügbarkeit von Wasser durch Quenschkühlung oder durch Wärmetausch zu kühlen.

Nach einer weiteren Ausführungsform der Gasturbine ist in der ersten Kühlluftleitung zwischen dem Verdichter und dem Anschluss der Verbindungsleitung an die erste Kühlluftleitung ein Rückschlagventil angeordnet, das eine Rückströmung von Hilfskühlluft aus der zweiten Kühlluftleitung durch die erste Kühlluftleitung in den Verdichter verhindert. Als Rückschlagventil ist hier jegliche Art von Rückschlagarmatur oder Klappe zu verstehen, die ein Schließelement umfast, das in einer Richtung geschlossen ist und in der anderen Richtung durch ein strömendes Fluid freigegeben wird.

Alternativ zu dem Rückschlagventil oder in Kombination mit dem Rückschlagventil kann in der ersten Kühlluftleitung zwischen dem Verdichter und dem Anschluss der Verbindungsleitung an die erste Kühlluftleitung ein Kühlluftregelelement angeordnet sein, mit dem die erste Kühlluftleitung zwischen Verdichter und Verbindungsleitung abgesperrt werden kann. Ein Befehl zum Absperren kann beispielsweise aufgrund einer Differenzdruckmessung, die eine Rückströmung von Hilfskühlluft indiziert, ausgelöst werden. Eine geeignete Differenzdruckmessung ist z.B. der Differenz zwischen dem Druck der Kühlluftentnahme, an die die erste Kühlluftleitung angeschlossen ist, und dem Druck an der Anschlussstelle, an dem die Verbindungsleitung in die erste Kühlluftleitung mündet.

Neben der Gasturbine ist ein Verfahren zum Betrieb einer derartigen Gasturbine Gegenstand der Offenbarung. Die Gasturbine umfasst einen Verdichter mit einer verstellbaren Verdichterleitschaufelreihe, eine Brennkammer und eine Turbine sowie ein Kühlluftsystem mit mindestens eine erste Kühlluftleitung, die von einer ersten Druckstufe des Verdichters zur Turbine führt und mindestens eine zweite Kühlluftleitung, die von einer höheren zweiten Druckstufe des Verdichters zur Turbine führt.

Nach einer Ausführung des offenbarten Verfahren wird bei Teillast der Gasturbine eine verstellbare Verdichterleitschaufelreihe gegenüber einer Vollastposition geschlossen und ein Hilfskühlluftstrom aus der zweiten Kühlluftleitung über eine Verbindungsleitung, die von der zweiten Kühlluftleitung zu der ersten Kühlluftleitung führt, geleitetet. Dabei wird dieser Hilfskühlluftstrom vor der Einleitung in die erste Kühlluftleitung in einer Kühlvorrichtung gekühlt und der Massenstrom dieses Hilfskühlluftstroms mit einem Regelelement geregelt.

Durch das Schliessen der verstellbaren Verdichterleitschaufeln verschiebt sich der Druckaufbau im Verdichter, so dass die Druckmarge von der ersten Verdichterentnahme, an die die erste Kühlluftleitung angeschlossen ist für eine zuverlässige Kühlung der Turbine nicht mehr ausreicht. Durch den Hilfskühlluftstrom wird der Druck in der ersten Kühlluftleitung erhöht. Der Entnahmestrom aus der ersten Verdichterentnahme wird dabei reduziert. Durch diese Reduktion steigt der Druck in der Verdichterentnahme. Bei starkem Schliessen der verstellbaren Verdichterleitreihen wird es aber zu einer negativen Druckmarge kommen, so dass keine Kühlluftentnahme aus der ersten Verdichterentnahme möglich ist.

Gemäss einer Ausführung des Verfahrens wird der Hilfskühlluftstrom in einem in der Verbindungsleitung angeordneten Quenschkühler durch Wassereinspritzung in den Hilfskühlluftstrom gekühlt. Vorteilhaft wird dadurch nicht nur der Hilfskühlluftstrom gekühlt, sondern auch sein Massenstrom erhöht.

Nach einer weiteren Ausführung des Verfahren wird der Hilfskühlluftstrom in einem in der Verbindungsleitung angeordneten Wärmetauscher gekühlt. Die abgeleitete Wärme kann nutzbringend z.B. als Prozesswärme verwendet werden.

Nach noch einer weiteren Ausführung des Verfahren wird der Hilfskühlluftstrom in den Treibmitteleinlass einer in der Verbindungsleitung angeordneten Injektorpumpe eingeleitet und über den saugseitigen Einlass der Injektorpumpe Umgebungsluft angesaugt. Dabei wird durch die Vermischung mit der angesaugten Umgebungsluft die Temperatur des resultierenden Hilfskühlluftstroms reduziert. Weiter wird die Mischung aus Umgebungsluft und Hilfskühlluftstrom in die erste Kühlluftleitung eingeleitet. Neben Hilfskühlluft mit reduzierter Temperatur wird durch die Zumischung von Umgebungsluft der Bedarf an Kühlluft mit hohem Druck aus der zweiten Kühlluftleitung reduziert und somit der Einfluss auf Leistung und Wirkungsgrad der Gasturbine minimiert.

Um eine sichere Kühlung der Turbine zu gewährleisten wird nach einer Ausführung des Verfahrens das Regelelement zur Regelung des Hilfskühlluftstroms geöffnet wird, solange die verstellbare Verdichterleitschaufelreihe weiter geschlossen ist, als ein erster Grenzwert der Verdichterleitschaufelposition. Da der Druckaufbau im Verdichter nicht nur von der Stellung der verstellbaren Vorleitschaufeln abhängig ist, sondern auch von anderen Betriebsparametern, wie der Umgebungstemperatur, Verschmutzung oder Alterung des Verdichters, oder beispielsweise einer Wassereinspritzung in den Verdichter, wird dieser erste Grenzwert beispielsweise so gross gewählt, dass sichergestellt ist, das unabhängig von den Betriebsbedingungen immer eine ausreichende Druckmarge in der ersten Kühlluftleitung gewährleistet ist. Der erste Grenzwert liegt beispielsweise im Bereich von einer gegenüber dem Vollastpunkt um 30°bis 50°geschlossenen verstellbaren Vorleitschaufelreihe.

Durch ein starkes Schliessen der verstellbaren Verdichterleitschaufeln kann es, je nach Schliesswinkel, Design des Verdichters und Lage der ersten Verdichterentnahme in der ersten Verdichterentnahme zu einem starken Druckabfall und im Extrem sogar zu einem Unterdruck gegenüber der Umgebung kommen. Um eine Rückströmung von Hilfskühlluft in den Verdichter zu verhindern wird nach einer Ausführung des Verfahrens, das Regelelement zur Regelung des Hilfskühlluftstroms geöffnet, solange die verstellbare Verdichterleitschaufelreihe weiter geschlossen ist, als ein zweiter Grenzwert der Verdichterleitschaufelposition. Der zweite Grenzwert liegt beispielsweise bei einer gegenüber dem Vollastpunkt um mehr als 40° bis 60° geschlossenen verstellbaren Vorleitschaufelreihe.

Nach einer weitern Ausführung des Verfahrens wird, um ein Rückströmen von Hilfskühlluft in den Verdichter zu verhindern, eine für die Rückströmung indikative Druckdifferenz gemessen. Als indikative Druckdifferenz kann z.B. die Differenz zwischen dem Druck in einer Verdichterkühlluftentnahme, an die die erste Kühlluftleitung angeschlossen ist, und dem Druck an der Anschlussstelle, an dem die Verbindungsleitung in die erste Kühlluftleitung mündet, gemessen werden. Das Kühlluftregelelement wird geschlossen, sobald diese Druckdifferenz negativ wird.

Das Regelventil zur Regelung des von der zweiten Kühlluftleitung in die erste Kühlluftleitung geleiteten Hilfskühlluftstroms sowie die Regelung des Kühlluftregelventils in der ersten Kühlluftleitung kann auch in Abhängigkeit von den Betriebsbedingungen der Gasturbine mit Hilfe von näherungsgleichen oder "Look-up Tabeln" (Tabellen) erfolgen. Dies kann beispielsweise in Abhängigkeit von der Umgebungstemperatur, der Verdichtereintrittstemperatur oder der aerodynamischen Drehzahl erfolgen.

Für manche Kraftwerksbetreiber ist es vorteilhaft die Gasturbine ohne Last zu betreiben, wenn die Leerlaufemissionen der Gasturbine dies erlauben, um Start- Stopzyklen zu vermeiden oder schnell Auflasten zu können.

Herkömmlich wird bei tiefer Teillast und Leerlauf die Heissgastemperatur stark abgesenkt, so dass insbesondere der Niederdruckteil der Gasturbine thermisch kaum belastet ist. Aufgrund der vorgeschlagenen Betriebsweise mit extrem weit geschlossenen verstellbaren Verdichterleitschaufelreihen wird kann die Heissgasabsenkung minimiert werden, so dass die Heissgastemperatur (oder Turbineneintrittstemperatur) hoch bleibt und auch die Turbinenaustrittstemperatur hoch bleibt. Die hohe Turbinenaustrittstemperatur ist insbesondere für den Betrieb eines Kombikraftwerkes mit nachgeschaltetem Kessel aus dem eine Dampfturbine gespiesen wird, wichtig, da der Wasserdampfteil des Kombikraftwerkes so in Betrieb bleiben kann, und insbesondere jederzeit ohne Haltepunkte aufgelastet werden kann. Weiter wird mit der hohen Abgastemperatur die thermische zyklische Belastung durch ein Ablasten auf tiefe Teillast oder Leerlauf der Komponenten des Wasserdampfkreislaufes reduziert oder ganz vermieden.
Nach einer Ausführung des Verfahrens wird die Turbinenabgastemperatur bei Teillast und Leerlauf durch Schliessen der verstellbaren Verdichterleitschaufelreihe nicht mehr als 80 Grad gegenüber der Volllast-Turbinenabgastemperatur abgesenkt. Insbesondere wird kann die Turbineabgastemperatur nach einer Ausführung die auf mindestens 80% der Volllast-Turbinenabgastemperatur (in °C gemessen) gehalten werden.

Weiter wird die Arbeitsabgabe der Turbine durch das reduzierte Druckverhältnis minimiert. Nach einer Ausführung des Verfahrens wird das Druckverhältnis der Turbine bei Lehrlauf auf ein Viertel des Vollastdruckverhältnisses oder ein noch kleineres Druckverhältnis geregelt.

Neben den beschrieben Ausführungsformen ist die Kombination der Verfahren mit anderen bekannten Massnahmen zur Reduktion von CO-Emissionen bei Teillast denkbar. Insbesondere Massnahmen zur Erhöhung der Verdichter Eintritts -Temperatur mittels Air-Pre-heater (Ansaugluftvorwärmung) und/oder Anti-Icing System sowie mittels Abgasrezirkulation sind denkbar.

Die Offenbarung ist ohne Einschränkung für Gasturbinen mit einer Brennkammer sowie für Gasturbinen mit sequentieller Verbrennung, wie sie beispielsweise aus der EP0718470 bekannt sind, anwendbar. Sie ist sogar besonders für Gasturbinen mit sequentieller Verbrennung geeignet, da bei derartigen Gasturbinen eine erste Brennkammer und eine erste Turbine typischerweise von einem Hochdruckkühlsystem, und eine zweite Brennkammer und eine zweite Turbine von einem oder mehreren Kühlsystem einer mittleren und niedrigeren Druckstufe gekühlt werden.

### KURZE BESCHREIBUNG DER ZEICHNUNG

Bevorzugte Ausführungsformen der Offenbarung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung einer Gasturbine mit einem Kühlluftsystem mit zwei Druckniveaus nach Stand der Technik;
- Fig. 2: eine schematische Darstellung einer Gasturbine mit einer Verbindungsleitung zwischen den zwei Kühlluftsystemen und einem Kühlvorrichtung für einen Hilfskühlluftstrom und ein Regelelement;
- Fig. 3: eine schematische Darstellung einer Gasturbine mit einem Quenschkühler zur Kühlung des Hilfskühlluftstroms;
- Fig. 4: eine schematische Darstellung einer Gasturbine mit einem Wärmetauscher zur Kühlung des Hilfskühlluftstroms;
- Fig. 5: eine schematische Darstellung einer Gasturbine mit einer Injektorpumpe zur Zumischung von Umgebungsluft und Kühlung des Hilfskühlluftstroms.

Die Ausführungsbeispiele und Figuren sind nur instruktiv zu verstehen, und sollen keineswegs der Einschränkung der in den Ansprüchen gekennzeichneten Offenbarung dienen.

### DETAILLIERTE BESCHREIBUNG

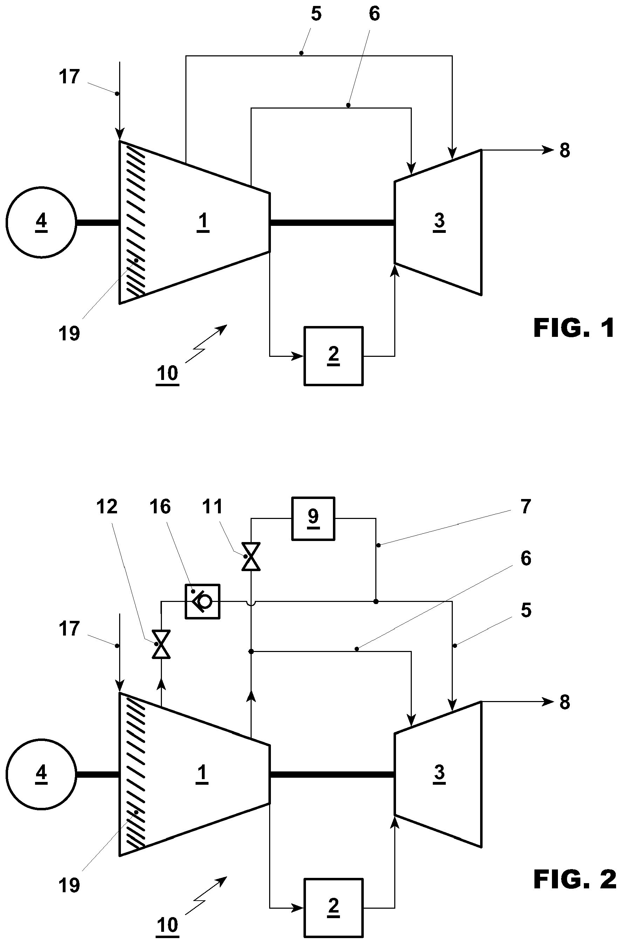

Fig. 1 zeigt in schematischer Darstellung die wesentlichen Elemente einer Gasturbine mit einem Kühlluftsystem mit zwei Druckniveaus. Die Gasturbine 10 umfasst einen Verdichter 1 (Kompressor), die darin verdichtete Verbrennungsluft wird einer Brennkammer 2 zugeführt und dort mit Brennstoff verbrannt. Anschliessend werden die heissen Verbrennungsgase in einer Turbine 3 entspannt. Die in der Turbine 3 erzeugte Nutzenergie wird dann zum Beispiel mit einem auf der gleichen Welle angeordneten Generator 4 in elektrische Energie umgewandelt.

Die aus der Turbine 3 austretenden heissen Abgase 8 werden typischerweise zur optimalen Nutzung der darin noch enthaltenen Energie in einem Abhitzedampferzeuger (Heat recovery steam generator, HRSG - nicht gezeigt) dazu verwendet, Dampf zu erzeugen. Dieser kann beispielsweise in einer Dampfturbine in nutzbare mechanische Leistung umgewandelt werden oder als Prozessdampf genutzt werden.

Die gezeigte Gasturbine 10 umfasst ein Kühlluftsystem mit zwei Druckstufen. Von einer ersten Druckstufe des Verdichters 1 führt eine erste Kühlluftleitung 5 Kühlluft zu der Turbine 3, in der diese Kühlluft thermisch belastete Bauteile im Niederdruckbereich der Turbine 3 kühlt. Von einer höheren zweiten Druckstufe des Verdichters 1 führt eine zweite Kühlluftleitung 6 Kühlluft zur Turbine 3, die thermisch belastete Bauteile im Hoch- und/oder Mitteldruckbereich der Turbine 3 kühlt. Die Brennkammer wird ebenfalls mit Hochdruckkühlluft gekühlt (nicht gezeigt).

In Fig. 2 ist eine schematische Darstellung einer Gasturbine 10 gezeigt, in der eine Verbindungsleitung 7 zwischen der ersten Kühlluftleitung 5 und der zweiten Kühlluftleitungen 6 angeordnet ist. In der Verbindungsleitung ist eine Kühlvorrichtung 9 für einen Hilfskühlluftstrom und ein Regelelement 11 vorgesehen. Bei geöffnetem Regelelement 11 strömt von der zweiten Kühlluftleitung 6 ein Hilfskühlluftstrom durch die Verbindungsleitung 7 und die Kühlvorrichtung 9 in die erste Kühlluftleitung 5. Durch den Hilfskühlluftstrom kann der Kühlluftdruck in der ersten Kühlluftleitung 5 erhöht werden, wenn dieser beispielsweise durch Schliessen der verstellbaren Verdichterleitschaufelreihe 19 unter einen erforderlichen Mindestdruck fällt.

Da die Kühlluft, die aus der ersten Verdichterentnahme abgeleitet wird, nur auf ein niedriges Druckniveau, typischerweise ein Fünftel bis ein Drittel des Verdichterenddruckes, verdichtet wird, ist diese Kühlluft relativ zur Verdichteraustrittstemperatur kühl. Typischerweise bleibt die Temperatur bei der ersten Entnahme abhängig von Auslegungs- und Betriebsbedingungen unter 200°C. Die Kühlluft der zweiten Kühlluftleitung 6 ist bei deutlich höherem Druckniveau oder sogar am Verdichteraustritt entnommen. Entsprechend ist diese Kühlluft deutlich wärmer als die Kühlluft der ersten Verdichterentnahme. Sie ist typischerweise höher als 250°C und kann 500°C übersteigen. Da die Kühlluft der zweiten Kühlluftleitung 6 wärmer ist, muss diese, bevor sie der ersten Kühlluftleitung 5 zugeführt wird, in der Kühlvorrichtung 9 gekühlt werden, um zu gewährleisten, dass die durch diese Hilfskühlluft oder durch eine Mischung aus Kühlluft der ersten Verdichterentnahme und Hilfskühlluft gekühlten Teile ihre Lebensdauer erreichen.

Erst durch die Kombination aus Kühlung und geregelter Zuführung von Hilfskühlluft kann ein längerer Teillastbetrieb mit weit geschlossenen verstellbaren Verdichterleitschaufelreihe 19 (um mehr als 30°, typischerwesie sogar um mehr als 40°gegenüber der Volllaststellung geschlossene verstellbare Verdichterleitschaufelreihe) ohne Lebensdauereinbusse realisiert werden. Dies ist besonders für sogenannte Tiefe Teillastfahrkonzepte (Low Load Operating Concepts) nötig. Diese Fahrkonzepte werden gebraucht, um eine Gasturbine bei geringem Strombedarf des Stromnetzes ohne Abschalten bei sehr tiefer Last betreiben zu können. Als tiefe Teillast wird typischerweise eine Last bezeichnet, die kleiner als 40% der Volllast ist. Je nach Netzanforderungen ist es vorteilhaft die Last unter 30% oder sogar bis unter 10% der Volllast abzusenken.

Um die Kühlluftversorgung über die erste Kühlluftleitung 5 zu regeln, ist ein Kühlluftregelelement 12 in der Kühlluftleitung 5 zwischen der ersten Verdichterentnahme und der Verbindungsleitung 7 angeordnet. Mit dieser kann der Kühlluftmassesstrom geregelt werden oder sogar ganz unterbunden werden, wenn bei tiefer Teillast die Niederdruckkühlung ganz durch die Hilfskühlluft realisiert wird. Weiter ist in der Kühlluftleitung 5 zwischen der ersten Verdichterentnahme und der Verbindungsleitung 7 ein Rückschlagventil 16 vorgesehen, das ein Rückströmen von Hilfskühlluft in den Verdichter bei starkem Schliessen der verstellbaren Verdichterleitschaufeln verhindert. Diese würde zu einem Leistungs- und Wirkungsgradverlust der Gasturbine 10 führen und könnte zu einer schädlichen Erwärmung des Verdichters 1 führen.

Ein Kühlluftregelventil ist ebenfalls in der zweiten Kühlluftleitung 6 denkbar, wobei diese lediglich als betriebszustandsabhängige Drosselung und nicht als Schliessventil zu verwenden wäre (nicht gezeigt).

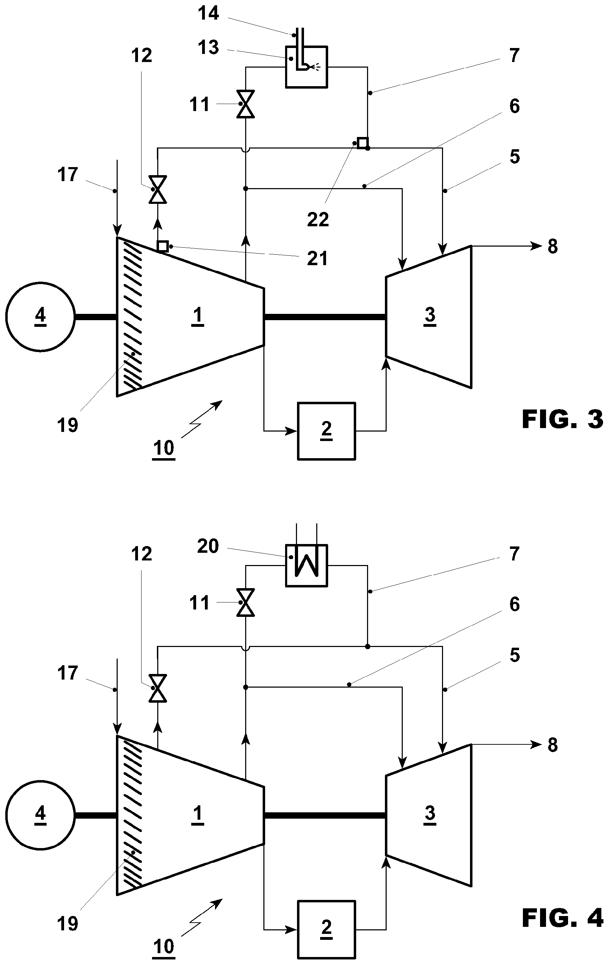

In Fig. 3 ist eine schematische Darstellung einer Gasturbine10 mit einem Quenschkühler 13 zur Kühlung des Hilfskühlluftstroms gezeigt. In dem Quenschkühler 13 wird in die Hilfskühlluft über eine Wassereinspritzung 14 Wasser eingespritzt, dass in dem Quenschkühler 13 verdampft und dabei die Hilfskühlluft kühlt. Der um den bei der Quenschkühlung entstehenden Wasserdampf erhöhte Hilfskühlluftstrom wird weiter durch die Verbindungsleitung 7 in die erste Kühlluftleitung 5 geleitet und zur Kühlung des Niederdruckteils der Turbine 3 verwendet.

Fig. 4 zeigt schematisch eine Darstellung einer Gasturbine 10 mit einem Wärmetauscher 20 zur Kühlung des Hilfskühlluftstroms. Der Hilfskühlluftstrom wird durch Wärmetausch auf eine Temperatur gekühlt, mit der der Hilfskühlluftstrom im Niederdruckkühlsystem die Lebensdauer des Niederdruckteils der Turbine 3 gewährleistet. Die Wärme wird z.B. durch Luft-Luft- Wärmetausch oder durch Luft- Wasser- Wärmetausch abgeführt.

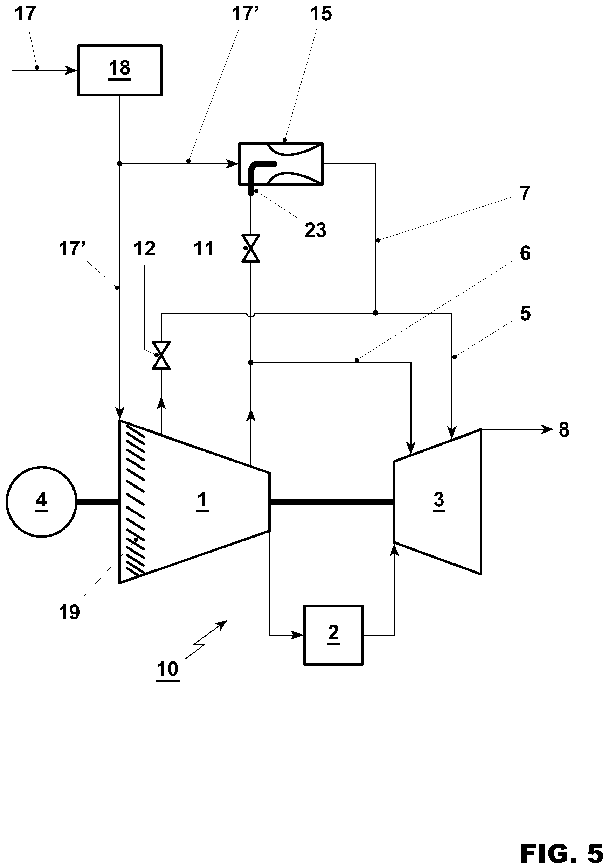

Fig. 5 zeigt schematisch eine Darstellung einer Gasturbine bei der eine Injektorpumpe 15 in der Verbindungsleitung 7 angeordnet ist. Über das Regelelement 11 ist Hilfskühlluft aus der zweiten Kühlluftleitung 6 dem Treibmitteleinlass 23 der Injektorpumpe 15 zuleitbar. Das Treibmittel strömt mit hoher Geschwindigkeit durch eine Düse aus, welche in etwa im engsten Querschnitt eines konvergent-divergenten Strömungsquerschnittes der Injektorpumpe 15 angeordnet ist. Der saugseitiger Einlass der Injektorpumpe 15 ist über das Filterhaus 18 der Gasturbine 10 mit der Umgebung verbunden. In der Injektorpumpe 15 kommt es zu einer Totaldruckerhöhung der angesaugten Umgebungsluft 17', wodurch diese zusammen mit der aus der zweiten Kühlluftleitung abgeleiteten Hilfskühlluft in die erste Kühlluftleitung eingeleitet werden kann. Durch die Vermischung mit Umgebungsluft 17' und Wahl eines entsprechenden Massenverhältnisse von Umgebungsluft und Hilfskühlluft wird die Mischungstemperatur an die Erfordernisse des Niederdruckkühlluftsystems angepasst.

Weiterhin ermöglicht es die Erfindung auch, die Kühlluftmenge beispielsweise in Abhängigkeit von der Heissgastemperatur im Bereich der zu kühlenden Komponenten auf ein zur Betriebssicherheit notwendiges Minimum zu reduzieren, und bei hoher Gasturbinenlast entsprechend anzuheben.

Selbstverständlich kann auch eine Gasturbine mit drei oder mehr Druckstufen ausgestattet werden.

Im Lichte der vorstehenden Ausführungen eröffnet sich dem Fachmann eine Vielzahl möglicher Ausführungsformen der in den Ansprüchen gekennzeichneten Erfindung.

### BEZUGSZEICHENLISTE

- 1: Verdichter
- 2: Brennkammer
- 3: Turbine
- 4: Generator
- 5: erste Kühlluftleitung
- 6: zweite Kühlluftleitung
- 7: Verbindungsleitung
- 8: Abgase
- 9: Kühlvorrichtung
- 10: Gasturbine
- 11: Regelelement
- 12: Kühlluftregelelement
- 13: Quenschkühler
- 14: Wassereinspritzung
- 15: Injektorpumpe
- 16: Rückschlagventil
- 17, 17': Umgebungsluft
- 18: Filterhaus
- 19: Verstellbare Verdichterleitschaufelreihe
- 20: Wärmetauscher
- 21: Druckmessung in der ersten Verdichterkühlluftentnahme
- 22: Druckmessung an der Anschlussstelle
- 23: Treibmitteleinlass

## Patentansprüche

1. Gasturbine (10) umfassend einen Verdichter (1), eine Brennkammer (2), eine Turbine (3) und ein Kühlluftsystem, das mindestens eine erste Kühlluftleitung (5) umfasst, die von einer ersten Druckstufe des Verdichters (1) zur Turbine (3) führt und mindestens eine zweite Kühlluftleitung (6) umfasst, die von einer höheren zweiten Druckstufe des Verdichters (1) zur Turbine (3) führt,
**dadurch gekennzeichnet, dass** das Kühlluftsystem der Gasturbine (10) eine Verbindungsleitung (7), die von der zweiten Kühlluftleitung (6) zu der ersten Kühlluftleitung (5) führt, umfasst, wobei in der Verbindungsleitung (7) eine Kühlvorrichtung (9), zur Kühlung eines von der zweiten Kühlluftleitung (6) in die erste Kühlluftleitung (5) strömenden Hilfskühlluftstroms, und ein Regelelement (11) angeordnet sind.

2. Gasturbine (10) nach Anspruch 1, **dadurch gekennzeichnet, dass** in der Verbindungsleitung (7) ein Quenschkühler (13) als Kühlvorrichtung (9) zur Kühlung des Hilfskühlluftstroms angeordnet ist.

3. Gasturbine (10) nach Anspruch 1 oder 2, **dadurch gekennzeichnet, dass** in der Verbindungsleitung (7) ein Wärmetauscher (20) als Kühlvorrichtung (9) zur Kühlung des Hilfskühlluftstroms angeordnet ist.

4. Gasturbine (10) nach einem der Ansprüche 1 bis 3, **dadurch gekennzeichnet, dass** in der Verbindungsleitung (7) eine Injektorpumpe (15) als Kühlvorrichtung (9) angeordnet ist, deren saugseitiger Einlass mit der Umgebung und deren Treibmitteleinlass (23) mit der zweiten Kühlluftleitung (6) verbunden ist, damit Umgebungsluft (17') angesaugt werden kann, und eine Mischung aus Umgebungsluft (17) und Hilfskühlluft aus der zweiten Kühlluftleitung (6) über einen Austritt der Injektorpumpe (15) durch die Verbindungsleitung (7) weiter in die erste Kühlluftleitung (5) geleitet werden kann.

5. Gasturbine (10) nach Anspruch 4, **dadurch gekennzeichnet, dass** der saugseitige Einlass in die Injektorpumpe (15) über ein Filterhaus (18) der Gasturbine (10) mit der Umgebung verbunden ist.

6. Gasturbine (10) nach einem der Ansprüche 1 bis 5 **dadurch gekennzeichnet, dass** in der ersten Kühlluftleitung (5) zwischen dem Verdichter (1) und dem Anschluss der Verbindungsleitung (7) an die erste Kühlluftleitung (5) ein Rückschlagventil (16) angeordnet ist, das eine Rückströmung von Hilfskühlluft aus der zweiten Kühlluftleitung (6) in den Verdichter (1) verhindert.

7. Gasturbine (10) nach einem der Ansprüche 1 bis 5, **dadurch gekennzeichnet, dass** in der ersten Kühlluftleitung (5) zwischen dem Verdichter (1) und dem Anschluss der Verbindungsleitung (7) an die erste Kühlluftleitung (5) ein Kühlluftregelelement (12) angeordnet ist, mit dem die erste Kühlluftleitung (5) zwischen Verdichter (1) und Verbindungsleitung (7) abgesperrt werden kann.

8. Verfahren zum Betrieb einer Gasturbine (10), die einen Verdichter (1) mit einer verstellbaren Verdichterleitschaufelreihe (19), eine Brennkammer (2) und eine Turbine (3) umfasst, wobei die Gasturbine ein Kühlluftsystem mit mindestens einer ersten Kühlluftleitung (5), die von einer ersten Druckstufe des Verdichters (1) zur Turbine (3) führt, und mindestens einer zweiten Kühlluftleitung (6), die von einer höheren zweiten Druckstufe des Verdichters (1) zur Turbine (3) führt, umfasst,
**dadurch gekennzeichnet, dass** bei Teillast der Gasturbine (10) eine verstellbare Verdichterleitschaufelreihe (19) gegenüber einer Vollastposition geschlossen wird und ein Hilfskühlluftstrom aus der zweiten Kühlluftleitung (6) über eine Verbindungsleitung (7), die von der zweiten Kühlluftleitung (6) zu der ersten Kühlluftleitung (5) führt, geleitetet wird, wobei dieser Hilfskühlluftstrom vor der Einleitung in die erste Kühlluftleitung (5) in einer Kühlvorrichtung (9) gekühlt wird und der Massenstrom dieses Hilfskühlluftstroms mit einem Regelelement (11) geregelt wird.

9. Verfahren zum Betrieb einer Gasturbine (10) nach Anspruch 8, **dadurch gekennzeichnet, dass** der Hilfskühlluftstrom in einem in der Verbindungsleitung (7) angeordneten Quenschkühler (13) durch Wassereinspritzung gekühlt wird.

10. Verfahren zum Betrieb einer Gasturbine (10) nach Anspruch 8 oder 9, **dadurch gekennzeichnet, dass** der Hilfskühlluftstrom in einem in der Verbindungsleitung (7) angeordneten Wärmetauscher (20) gekühlt wird.

11. Verfahren zum Betrieb einer Gasturbine (10) nach einem der Ansprüche 8 bis 10, **dadurch gekennzeichnet, dass** der Hilfskühlluftstrom in einen Treibmitteleinlass (23) einer in der Verbindungsleitung (7) angeordneten Injektorpumpe (15) eingeleitet wird, über den saugseitigen Einlass der Injektorpumpe (15) Umgebungsluft (17, 17') angesaugt wird und durch die Vermischung mit der Umgebungsluft (17) die Temperatur des Hilfskühlluftstroms reduziert wird und Mischung aus Umgebungsluft und Hilfskühlluftstrom in die erste Kühlluftleitung (5) eingeleitet wird.

12. Verfahren zum Betrieb einer Gasturbine (10) nach einem der Ansprüche 8 bis 11 **dadurch gekennzeichnet, dass** das Regelelement (11) zur Regelung des Hilfskühlluftstroms geöffnet ist, solange die verstellbare Verdichterleitschaufelreihe (19) weiter geschlossen ist, als eine erster Grenzwert der Verdichterleitschaufelposition.

13. Verfahren zum Betrieb einer Gasturbine (10) nach einem der Ansprüche 8 bis 12 **dadurch gekennzeichnet, dass** ein Kühlluftregelelement (12) in der ersten Kühlluftleitung (5) zwischen Verdichter (1) und Anschluss der Verbindungsleitung (7) angeordnet ist, solange die verstellbare Verdichterleitschaufelreihe (19) weiter geschlossen ist, als ein zweiter Grenzwert der Verdichterleitschaufelposition.

14. Verfahren zum Betrieb einer Gasturbine (10) nach einem der Ansprüche 8 bis 13 **dadurch gekennzeichnet, dass** die Druckdifferenz zwischen dem Druck in einer Verdichterkühlluftentnahme (21), an die die erste Kühlluftleitung (5) angeschlossen ist, und dem Druck an der Anschlussstelle (22), an dem die Verbindungsleitung (7) in die erste Kühlluftleitung (5) mündet, gemessen wird, und dass das Kühlluftregelelement (12) geschlossen wird, sobald diese Druckdifferenz negativ wird.

15. Verfahren zum Betrieb einer Gasturbine (10) nach einem der Ansprüche 8 bis 14 **dadurch gekennzeichnet, dass** bei tiefer Teillast unter 30% der Vollastleistung und bei Leerlauf durch Schliessen der verstellbaren Verdichterleitschaufelreihe (19) die Turbinenabgastemperatur auf mindestens 80% der Volllast-Turbinenabgastemperatur gehalten wird.

## Claims

1. Gas turbine (10) comprising a compressor (1), a combustion chamber (2), a turbine (3) and a cooling air system with at least one first cooling air line (5) which leads from a first pressure stage of the compressor (1) to the turbine (3), and at least one second cooling air line (6) which leads from a higher second pressure stage of the compressor (1) to the turbine (3),
**characterised in that** the cooling air system of the gas turbine (10) comprises a connecting line (8) which leads from the second cooling air line (8) to the first cooling air line (5), wherein in the connecting line (7) are arranged a cooling device (9) for cooling an auxiliary cooling air flow flowing from the second cooling air line (6) into the first cooling air line (5), and a control element (11).

2. Gas turbine (10) according to claim 1, **characterised in that** in the connecting line (7), a quench cooler (13) is arranged as a cooling device (9) for cooling the auxiliary cooling air flow.

3. Gas turbine (10) according to claim 1 or 2, **characterised in that** in the connecting line (7), a heat exchanger (20) is arranged as a cooling device (9) for cooling the auxiliary cooling air flow.

4. Gas turbine (10) according to any of claims 1 to 3, **characterised in that** in the connecting line (7), an injector pump (15) is arranged as cooling device (9), the suction-side inlet of which is connected to the environment, and the working medium inlet (23) of which is connected to the second cooling air line (6) so that ambient air (17') can be drawn in, and a mixture of ambient air (17) and auxiliary cooling air from the second cooling air line (6) can be conducted via an outlet of the injector pump (15) through the connecting line (7) and on into the first cooling air line (5).

5. Gas turbine (10) according to claim 4, **characterised in that** the suction-side inlet into the injector pump (15) is connected to the environment via a filter housing (18) of the gas turbine (10).

6. Gas turbine (10) according to any of claims 1 to 5, **characterised in that** in the first cooling air line (5) between the compressor (1) and the connection of the connecting line (7) to the first cooling air line (5), a check valve (16) is arranged which prevents a back flow of auxiliary cooling air from the second cooling air line (6) to the compressor (1).

7. Gas turbine (10) according to any of claims 1 to 5, **characterised in that** in the first cooling air line (5) between the compressor (1) and the connection of the connecting line (7) to the first cooling air line (5), a cooling air control element (12) is arranged with which the first cooling air line (5) between the compressor (1) and the connecting line (7) can be shut off.

8. Method for operating a gas turbine (10) which comprises a compressor (1) with an adjustable guide vane row (19), a combustion chamber (2) and a turbine (3), wherein the gas turbine comprises a cooling air system with at least one first cooling air line (5) which leads from a first pressure stage of the compressor (1) to the turbine (3), and at least one second cooling air line (6) which leads from a higher second pressure stage of the compressor (1) to the turbine (3),
**characterised in that** at part load of the gas turbine (10), an adjustable compressor guide vane row (19) is closed in comparison with a full load position, and an auxiliary cooling air flow from the second cooling air line (6) is conducted via a connecting line (7) which leads from the second cooling air line (6) to the first cooling air line (5), wherein this auxiliary cooling air flow is cooled in a cooling device (9) before introduction into the first cooling air line (5), and the mass flow of this auxiliary cooling air flow is controlled with a control element (11).

9. Method for operating a gas turbine (10) according to claim 8, **characterised in that** the auxiliary cooling air flow is cooled by water injection in a quench cooler (13) arranged in the connecting line (7).

10. Method for operating a gas turbine (10) according to claim 8 or 9, **characterised in that** the auxiliary cooling air flow is cooled in a heat exchanger (20) arranged in the connecting line (7).

11. Method for operating a gas turbine (10) according to any of claims 8 to 10, **characterised in that** the auxiliary cooling air flow is conducted into a working medium inlet (23) of an injector pump (15) arranged in the connecting line (7), ambient air (17, 17') is drawn in via the suction side inlet of the injector pump (15) and the temperature of the auxiliary cooling air flow is reduced by mixing with the ambient air (17), and the mixture of ambient air and auxiliary cooling air flow is conducted into the first cooling air line (15).

12. Method for operating a gas turbine (10) according to any of claims 8 to 11, **characterised in that** the control element (11) for controlling the auxiliary cooling air flow is opened as long as the adjustable compressor guide vane row (19) is closed further than a first limit value of the compressor guide vane position.

13. Method for operating a gas turbine (10) according to any of claims 8 to 12, **characterised in that** a cooling air control element (12) is arranged in the first cooling air line (5) between the compressor (1) and the connection of the connecting line (7), as long as the adjustable compressor guide vane row (19) is closed further than a second limit value of the compressor guide vane position.

14. Method for operating a gas turbine (10) according to any of claims 8 to 13, **characterised in that** the pressure difference is measured between the pressure in a compressor cooling air take-off (21) to which the first cooling air line (5) is connected, and the pressure at the connection point (22) at which the connecting line (7) opens into the first cooling air line (5), and the cooling air control element (12) is closed as soon as this pressure difference becomes negative.

15. Method for operating a gas turbine (10) according to any of claims 8 to 14, **characterised in that** at a low part load of less than 30% of the full load power, and on idle, by closing the adjustable compressor guide vane row (19), the turbine exhaust gas temperature is held to at least 80% of the full load turbine exhaust gas temperature.

## Revendications

1. Turbine à gaz (10) comprenant un compresseur (1), une chambre de combustion (2), une turbine (3) et un système de refroidissement par air, qui comprend au moins une première conduite d'air de refroidissement (5), qui conduit d'un premier étage de pression du compresseur (1) vers la turbine (3) et au moins une deuxième conduite d'air de refroidissement (6), qui conduit d'un deuxième étage de pression, plus élevé, du compresseur (1), vers la turbine (3),
**caractérisé en ce que**
le système de refroidissement par air de la turbine à gaz (10) comprend une conduite de liaison (7), qui conduit de la deuxième conduite d'air de refroidissement (6) vers la première conduite d'air de refroidissement (5), un dispositif de refroidissement (9), pour le refroidissement d'un flux d'air de refroidissement auxiliaire s'écoulant de la deuxième conduite d'air de refroidissement (6) vers la première conduite d'air de refroidissement (5), et un élément de régulation (11) étant disposés dans la conduite de liaison (7).

2. Turbine à gaz (10) selon la revendication 1, **caractérisée en ce que**, dans la conduite de liaison (7), est disposé un refroidisseur à trempe (13) en tant que dispositif de refroidissement (9) pour le refroidissement du flux d'air de refroidissement auxiliaire.

3. Turbine à gaz (10) selon la revendication 1 ou 2, **caractérisée en ce que**, dans la conduite de liaison (7), est disposé un échangeur thermique (20) en tant que dispositif de refroidissement (9) pour le refroidissement du flux d'air de refroidissement auxiliaire.

4. Turbine à gaz (10) selon l'une des revendications 1 à 3, **caractérisée en ce que**, dans la conduite de liaison (7), est disposée une pompe d'injection (15) en tant que dispositif de refroidissement (9) dont l'entrée côté aspiration est reliée avec l'environnement et dont l'entrée côté gaz propulseur (23) est reliée avec la deuxième conduite d'air de refroidissement (6), afin de pouvoir aspirer l'air ambiant (17') et de conduire un mélange d'air ambiant (17) et d'air de refroidissement auxiliaire de la deuxième conduite d'air de refroidissement (6) par l'intermédiaire d'une sortie de la pompe d'injection (15) à travers la conduite de liaison (7) plus loin vers la première conduite d'air de refroidissement (5).

5. Turbine à gaz (10) selon la revendication 4, **caractérisée en ce que** l'entrée côté aspiration dans la pompe d'injection (15) est reliée par l'intermédiaire d'un boîtier à filtre (18) de la turbine à gaz (10) avec l'environnement.

6. Turbine à gaz (10) selon l'une des revendications 1 à 5, **caractérisée en ce que**, dans la première conduite d'air de refroidissement (5), entre le compresseur (1) et le raccordement de la conduite de liaison (7) à la première conduite d'air de refroidissement (5), se trouve un clapet anti-retour (16) qui empêche le retour de l'air de refroidissement auxiliaire de la deuxième conduite d'air de refroidissement (6) vers le compresseur (1).

7. Turbine à gaz (10) selon l'une des revendications 1 à 5, **caractérisée en ce que**, dans la première conduite d'air de refroidissement (5), entre le compresseur (1) et le raccordement de la conduite de liaison (7) à la première conduite d'air de refroidissement (5), se trouve un élément de régulation de l'air de refroidissement (12) permettant de bloquer la première conduite d'air de refroidissement (5) entre le compresseur (1) et la conduite de liaison (7).

8. Procédé d'exploitation d'une turbine à gaz (10), qui comprend un compresseur (1) avec une série d'aubes de compresseur réglables (19), une chambre de combustion (2) et une turbine (3), la turbine à gaz comprenant un système de refroidissement par air avec au moins une première conduite d'air de refroidissement (5), qui conduit d'un premier étage de pression du compresseur (1) vers la turbine (3) et au moins une deuxième conduite d'air de refroidissement (6), qui conduit d'un deuxième étage de pression plus élevé du compresseur (1) vers la turbine (3),
**caractérisé en ce que**
dans le cas d'une charge partielle de la turbine à gaz (10), une série d'aubes de compresseur réglables (19) est fermée par rapport à une position de pleine charge et un flux d'air de refroidissement auxiliaire provenant de la deuxième conduite d'air de refroidissement (6) par l'intermédiaire d'une conduite de liaison (7), qui conduit de la deuxième conduite d'air de refroidissement (6) vers la première conduite d'air de refroidissement (5), est guidé, ce flux d'air de refroidissement auxiliaire étant refroidi, avant son introduction dans la première conduite d'air de refroidissement (5), dans un dispositif de refroidissement (9) et le débit massique de ce flux d'air de refroidissement auxiliaire étant régulé par un élément de régulation (11).

9. Procédé d'exploitation d'une turbine à gaz (10) selon la revendication 8, **caractérisé en ce que** le flux d'air de refroidissement auxiliaire est refroidi par injection d'eau dans un refroidisseur à trempe (13) disposé dans la conduite de liaison (7).

10. Procédé d'exploitation d'une turbine à gaz (10) selon la revendication 8 ou 9, **caractérisé en ce que** le flux d'air de refroidissement auxiliaire est refroidi dans un échangeur thermique (20) disposé dans la conduite de liaison (7).

11. Procédé d'exploitation d'une turbine à gaz (10) selon l'une des revendications 8 à 10, **caractérisé en ce que** le flux d'air de refroidissement est introduit dans une entrée de gaz propulseur (23) d'une pompe à injection (15) disposée dans la conduite de liaison (7), de l'air ambiant (17, 17') est aspiré par l'intermédiaire de l'entrée côté aspiration de la pompe à injection (15) et le mélange avec l'air ambiant (17) permet de réduire la température du flux d'air de refroidissement auxiliaire et le mélange constitué de l'air ambiant et du flux d'air de refroidissement auxiliaire est introduit dans la première conduite d'air de refroidissement (5).

12. Procédé d'exploitation d'une turbine à gaz (10) selon l'une des revendications 8 à 11, **caractérisé en ce que** l'élément de régulation (11) pour la régulation du flux d'air de refroidissement auxiliaire est ouvert tant que la série d'aubes de compresseur réglables (19) est fermée plus loin qu'une première valeur limite de la position des aubes du compresseur.

13. Procédé d'exploitation d'une turbine à gaz (10) selon l'une des revendications 8 à 12, **caractérisé en ce qu'**un élément de régulation de l'air de refroidissement (12) est disposé dans la première conduite d'air de refroidissement (5) entre le compresseur (1) et le raccordement de la conduite de liaison (7) tant que la série d'aubes de compresseur réglables (19) est fermée plus loin qu'une deuxième valeur limite de la position des aubes du compresseur.

14. Procédé d'exploitation d'une turbine à gaz (10) selon l'une des revendications 8 à 13, **caractérisé en ce que** la différence de pression entre la pression dans un prélèvement d'air de refroidissement du compresseur (21), auquel est reliée la première conduite d'air de refroidissement (5), et la pression au niveau du raccordement (22), au niveau duquel la conduite de liaison (7) débouche dans la première conduite d'air de refroidissement (5), est mesurée et **en ce que** l'élément de régulation de l'air de refroidissement (12) est fermé dès que cette différence de pression devient négative.

15. Procédé d'exploitation d'une turbine à gaz (10) selon l'une des revendications 8 à 14, **caractérisé en ce que**, dans le cas d'une charge partielle plus faible inférieure à 30 % de la puissance de pleine charge et dans le cas d'un fonctionnement à vide, la fermeture de la série d'aubes de compresseur réglables (19) permet de maintenir la température des gaz d'échappement de la turbine à au moins 80 % de température des gaz d'échappement de la turbine à pleine charge.
